(19) **Europäisches Patentamt / European Patent Office / Office européen des brevets**

(11) **EP 1 739 778 A2**

(12) # EUROPÄISCHE PATENTANMELDUNG

(43) Veröffentlichungstag:
**03.01.2007 Patentblatt 2007/01**

(51) Int Cl.:
**H01M 8/04** *(2006.01)* **H01M 8/10** *(2006.01)*

(21) Anmeldenummer: **06115643.6**

(22) Anmeldetag: **19.06.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **29.06.2005 DE 102005031521**

(71) Anmelder: **Deutsches Zentrum für Luft- und Raumfahrt e.V.**
**51147 Köln (DE)**

(72) Erfinder: **Schirmer, Johannes**
**71549, Auenwald (DE)**

(74) Vertreter: **Hoeger, Stellrecht & Partner Patentanwälte**
**Uhlandstrasse 14 c**
**D-70182 Stuttgart (DE)**

(54) **Verfahren zur Bestimmung des Brennstoffverbrauchs eines Brennstoffzellensystems, Verfahren zum Betrieb eines Brennstoffzellensystems und Brennstoffzellensystem**

(57) Es wird ein Verfahren zur Bestimmung des Brennstoffverbrauchs eines Brennstoffzellensystems mit mindestens einer Brennstoffzelle, welche eine Anode und eine Kathode aufweist, wobei der Anode Brennstoff und der Kathode Oxidator zugeführt wird, und bei welcher ein Brennstoffübertritt von der Anodenseite zur Kathodenseite aufitreten kann, bereitgestellt, bei welchem der Brennstoffverbrauch als Summe eines Stromanteils und eines Übertrittsanteils berechnet wird, wobei zur Bestimmung des Stromanteils der von dem Brennstoffzellensystem erzeugte Strom gemessen wird und der Übertrittsanteil mittels einer vorher bestimmten Kalibrierungsfunktion für den Brennstoffübertritt ermittelt wird.

FIG.2

EP 1 739 778 A2

**Beschreibung**

Die Erfindung betrifft ein Verfahren zur Bestimmung des Brennstoffverbrauchs eines Brennstoffzellensystems mit mindestens einer Brennstoffzelle, welche eine Anode und eine Kathode aufweist, wobei der Anode Brennstoff und der Kathode Oxidator zugeführt wird, und bei welchem ein Brennstoffübertritt von der Anodenseite zur Kathodenseite auftreten kann.

Die Erfindung betrifft ferner ein Verfahren zum Betrieb eines Brennstoffzellensystems, welches mindestens eine Brennstoffzelle mit einer Anode und einer Kathode umfasst, wobei anodenseitig Brennstoff zugeführt wird und kathodenseitig Oxidator zugeführt wird, und wobei Brennstoff von der Anodenseite zur Kathodenseite übertreten kann.

Die Erfindung betrifft ferner ein Brennstoffzellensystem, umfassend mindestens eine Brennstoffzelle mit einer Anode und einer Kathode, und eine Regelungseinrichtung für die Brennstoffzuführung.

Direktmethanolbrennstoffzellen (DMFC) oder Direktethanolbrennstoffzellen (DEFC) bieten den Vorteil, dass sie mit einem flüssigen Brennstoff betrieben werden können, der drucklos und mit vergleichsweise geringem technischen Aufwand gelagert und bereitgestellt werden kann. Dadurch sind solche Systeme insbesondere für einen mobilen Einsatz, z. B. in Kraftfahrzeugen, sehr attraktiv.

Beim Betrieb wird der Anode ein Brennstoff-Lösungsmittelgemisch (üblicherweise ist das Lösungsmittel Wasser) zugeführt, wobei in Bezug auf den an der Anode umgesetzten Brennstoff meist ein Überschuss an Brennstoff erforderlich ist. Es tritt dabei grundsätzlich das Problem auf, dass Brennstoff elektroosmotisch von der Anode zur Kathode übertreten kann. Dies wird auch als Brennstoff-Crossover oder Brennstoff-Drag bezeichnet. Aufgrund dieses Übertritts erfolgt eine für die Stromerzeugung nicht nutzbare direkte Oxidation des Brennstoffs an der Kathodenseite. Um den dadurch bedingten Brennstoffverlust möglichst gering zu halten und einen optimalen Betrieb des Brennstoffzellensystems zu gewährleisten, sollte die Methanolkonzentration nicht zu hoch sein und insbesondere bei einem konstanten Wert gehalten werden.

In der Literatur sind verschiedene Verfahren zur Bestimmung der Brennstoffkonzentration bekannt.

Aus der DE 199 38 790 A1 ist ein Verfahren zur Bestimmung der Brennstoffkonzentration im Elektrolyt von mit flüssigem Brennstoff betriebenen Brennstoffzellen, insbesondere zur Bestimmung der Konzentration von Methanol im Elektrolyt von Direkt-Methanol-Brennstoffzellen, bekannt, bei dem mit dem Brennstoff/Elektrolyt-Gemisch als Dielektrikum die Kapazität eines Kondensators gemessen wird, daraus die Dielektrizitätskonstante des Gemischs ermittelt und dann die Brennstoffkonzentration bestimmt wird.

Aus der DE 199 45 928 C1 ist ein Verfahren zur Bestimmung der Alkoholkonzentration im Alkohol/Wasser-Gemisch von mit diesem Gemisch betriebenen Brennstoffzellen bekannt, bei dem ein Teil des Alkohol/Wasser-Gemisches abgetrennt und gegen einen vorgegebenen Druck gefördert wird. Der abgetrennte Teil des Gemisches wird zum Sieden erhitzt, die Siedetemperatur gemessen und daraus der Stoffmengenanteil des Alkohols im Gemisch ermittelt.

Aus der DE 199 48 908 A1 ist ein Verfahren zur Bestimmung der Alkoholkonzentration im Alkohol/Wasser-Gemisch von mit diesem Gemisch betriebenen Brennstoffzellen, insbesondere Direktmethanolbrennstoffzellen, bekannt, bei dem das Alkohol/Wasser-Gemisch mit konstanter Fließgeschwindigkeit durch eine Heizstrecke gefördert, dem Gemisch eine bekannte Wärmemenge zugeführt, die Temperaturdifferenz zwischen Beginn und Ende der Heizstrecke gemessen und daraus die Alkoholkonzentration bestimmt wird.

Aus der WO 03/012904 A2 ist ein Verfahren zur Regelung der Methanolkonzentration eines Direktmethanolbrennstoffzellensystems mit mindestens einer Brennstoffzelle und einem separaten Methanolreservoir bekannt, wobei die Brennstoffzelle durch Kennlinien einer Spannung in Abhängigkeit der Systemgrößen Stromstärke und Methanolkonzentration sowie weiterer Systemparameter charakterisiert ist, und wobei die Stromstärke variiert wird und in Abhängigkeit der resultierenden Spannung der Brennstofflösung Methanol aus dem Methanolreservoir zugeführt wird.

Aus dem Artikel "Design and Operation of an electrochemical Methanol Concentration Sensor for Direct Methanol Fuel Cell Systems" von S.R. Narayanan et al., Electrochemical and Solid-State Letters 3(3) 117 - 120 (2000) ist ein Methanolkonzentrationssensor bekannt, welcher sich eignet für den Einsatz in Verbindung mit Direktmethanolbrennstoffzellen.

Weitere Verfahren zur Regelung bzw. Bestimmung der Methanolkonzentration in Direktmethanolbrennstoffzellen sind aus den Druckschriften US 2002/0086193 A1, US 2003/0157385 A1, WO 02/15314 A1, US 6,488,837 B1, WO 02/46733 A1 oder US 2003/0224231 A1 bekannt.

Aus der DE 102 58 496 A1 ist ein Verfahren zur Regelung der Brennstoffzufuhr zu einem Brennstoffzellensystem, welches zumindest eine Brennstoffzelle umfasst, bekannt. Die Leistungsentnahme aus der Brennstoffzelle erfolgt durch Einschalten und Ausschalten einer elektrischen Verbindung zwischen der Brennstoffzelle und einem Verbraucher; die Verbindung wird in Abhängigkeit des in der Brennstoffzelle vorhandenen Brennstoffs getaktet. Die Menge an Brennstoff wird in Abhängigkeit eines Pausen- zu Einschaltverhältnis der getakteten Verbindung der Brennstoffzelle mit dem Verbraucher in der Art geregelt, dass sich ausgehend von einem Istwert des Pausen- zu Einschaltverhältnisses ein vorgegebener Sollwert des Pausen- zu Einschaltverhältnisses einstellt.

Aus der DE 100 39 959 ist ein Verfahren zur Regelung der Brennstoffkonzentration in der Anodenflüssigkeit einer Brennstoffzelle mit Anode, Membran und Kathode bekannt, bei der an der Anode einerseits und der Kathode andererseits jeweils ein Abgas abfällt. Die Kohlendioxidkonzentration wird im Kathodenabgas gemessen und der über der Membran anfallende Brennstoffverlust wird erfasst.

Der Erfindung liegt die Aufgabe zugrunde, ein Verfahren der eingangs genannten Art bereitzustellen, welches auf einfache Weise durchführbar ist.

Diese Aufgabe wird bei dem oben genannten Verfahren erfindungsgemäß dadurch gelöst, dass der Brennstoffverbrauch als Summe eines Stromanteils und eines Übertrittanteils berechnet wird, wobei zur Bestimmung des Stromanteils der von dem Brennstoffzellensystem erzeugte Strom gemessen wird und der Übertrittanteil mittels einer vorher bestimmten Kalibrierungsfunktion für den Brennstoffverbrauch ermittelt wird.

Bei der erfindungsgemäßen Lösung wird der Brennstoffverbrauch als Summe des Stromanteils und des Übertrittanteils berechnet. Der Übertrittanteil wird nicht gemessen, sondern mit Hilfe einer vorher bestimmten Kalibrierungsfunktion bestimmt. In die Kalibrierungsfunktion gehen insbesondere leicht messbare Parameter ein, wie beispielsweise der Temperatur T, der Strom I und der stöchiometrischer Faktor $\lambda_A$ beispielsweise für den Brennstoffüberschuss. Dadurch ist kein Sensor mehr für die Bestimmung der Brennstoffkonzentration notwendig. Solche Sensoren sind üblicherweise sehr teuer. Das Brennstoffzellensystem muss also, wenn die Kalibrierungsfunktion bekannt ist, nicht mit einem solchen Sensor versehen werden. Es lässt sich daher kostengünstig herstellen.

Die Kalibrierungsfunktion ist eine Ansammlung von Kalibrierungsdaten. Es muss sich dabei nicht unbedingt um eine analytisch darstellbare Funktion handeln. Es muss sich auch um keine Funktion mit zusammenhängenden Funktionswertebereichen handeln.

Es ist insbesondere vorgesehen, dass der Brennstoff der Anode in Lösung zugeführt wird. Üblicherweise wird bei Direktmethanolbrennstoffzellensystemen oder Direktethanolbrennstoffzellensystemen der Brennstoff in wässriger Lösung der Anode zugeführt.

Insbesondere wird der erzeugte Strom zeitaufgelöst während des Betriebs des Brennstoffzellensystems gemessen. Dadurch lässt sich grundsätzlich zu den Messpunkten der Brennstoffverbrauch ermitteln. Durch die Messung des Stroms lässt sich direkt der Stromanteil ermitteln (d. h. derjenige Anteil im Brennstoffverbrauch, der direkt auf die elektrochemische Umsetzung von Brennstoff und Oxidator zurückzuführen ist). Weiter lässt sich der gemessene Wert dazu nutzen, um den Übertrittanteil zu bestimmen.

Insbesondere wird die Kalibrierungsfunktion für Brennstoffübertritt für einen Brennstoffzellenblock oder einen Typus von Brennstoffzellenblöcken individuell ermittelt. Die Kalibrierungsfunktion ist abhängig von bestimmten Eigenschaften eines Brennstoffzellensystems, insbesondere der Ausgestaltung des Elektrolyten, von Elektrodenschichten, Gasdiffusionsschichten und Aufbau von Fluidverteilern, die spezifisch für ein Brennstoffzellensystem sind. Durch die individuelle Ermittlung wird sichergestellt, dass die Kalibrierungsfunktion für ein gegebenes System genau genug ist.

Es kann dabei vorgesehen sein, dass die Kalibrierungsdaten für die Kalibrierungsfunktion mittels eines oder mehrerer Sensoren ermittelt werden. Es lassen sich dabei Verfahren und Sensoren verwenden, wie sie in dem eingangs beschriebenen Stand der Technik beschrieben sind. Wenn die Kalibrierungsfunktion als Gesamtmenge der Kalibrierungsdaten festliegt, dann ist keine Messung während des Betriebsmodus des Brennstoffzellensystems mehr notwendig.

Insbesondere werden die Kalibrierungsdaten für die Kalibrierungsfunktion in Abhängigkeit von einem oder mehreren der Parameter Brennstoffkonzentration, Temperatur, erzeugter Strom, stöchiometrischer Faktor, Betriebsdruck ermittelt. Die Kalibrierungsdaten können für einen oder mehrere diskrete Werte der Brennstoffkonzentrationen ermittelt werden. Bei dem oder den diskreten Werten handelt es sich insbesondere um Zielkonzentrationen. Da sich der Betriebsdruck auf einfache Weise konstant halten lässt, muss die Abhängigkeit von ihm nicht unbedingt ermittelt werden.

Insbesondere werden die Parameter Temperatur und/oder erzeugter Strom und/oder stöchiometrischer Faktor und/oder Brennstoffkonzentration und/oder Betriebsdruck zur Ermittlung der Kalibrierungsdaten variiert. Da üblicherweise ein Brennstoffzellensystem mit konstanter Brennstoffkonzentration betrieben werden soll, ist eine Variation in der Brennstoffkonzentration nicht unbedingt notwendig, sondern es reicht grundsätzlich aus, eine oder mehrere diskrete Brennstoffkonzentrationen entsprechend der Zielkonzentration für den Betrieb vorzugeben.

Günstigerweise werden Kalibrierungsdaten der Kalibrierungsfunktion in Form von Brennstoffübertrittsmengen pro Zeiteinheit abgespeichert. Dadurch lässt sich dann direkt der Übertrittanteil im Brennstoffverbrauch mit Hilfe der Kalibrierungsfunktion ermitteln.

Vorteilhaft ist es, wenn zur Bestimmung des Übertrittanteils am Brennstoffverbrauch die Temperatur und/oder der erzeugte Strom und/oder der stöchiometrische Faktor und/oder der Betriebsdruck ermittelt oder erfasst werden und über die Kalibrierungsfunktion der zugehörige Übertrittanteil im Brennstoffverbrauch bestimmt wird. Dadurch lässt sich der Übertrittanteil während des Betriebsmodus der Brennstoffzelle aus der Kalibrierungsfunktion bestimmen. Dieser lässt sich über die Ermittlung bzw. Messung von einfach zugänglichen Parametern ermitteln. Insbesondere wird die Brennstoffkonzentration nicht gemessen, sondern als Zielkonzentration vorgegeben.

Insbesondere werden die Parameter zeitaufgelöst ermittelt. Dadurch lässt sich zu jedem Zeitpunkt der Brennstoffverbrauch ermitteln.

Insbesondere ist der Brennstoff ein Alkohol. Bei dem Brennstoffzellensystem handelt es sich dann insbesondere um ein Direktmethanolbrennstoffzellensystem oder um ein Direktethanolbrennstoffzellensystem.

Der Erfindung liegt ferner die Aufgabe zugrunde, ein Verfahren zum Betrieb eines Brennstoffzellensystems der eingangs genannten Art bereitzustellen, welches auf einfache Weise durchführbar ist mit einfachem Aufbau des Brennstoffzellensystems.

Diese Aufgabe wird bei dem eingangs genannten Verfahren erfindungsgemäß dadurch gelöst, dass der Brennstoffverbrauch gemäß dem erfindungsgemäßen Messverfahren ermittelt wird und die anodenseitige Brennstoffzuführung gemäß dem ermittelten Brennstoffverbrauch geregelt wird.

Üblicherweise wird derart geregelt, dass die Brennstoffkonzentration konstant gehalten wird, und zwar auf einem optimalen Betriebspunkt, in dem der Übertrittanteil nicht zu groß ist und bei dem sich stabile Stromerzeugungsverhältnisse ergeben. Anhand des ermittelten Brennstoffverbrauchs lässt sich eine Einregelung auf diese Konzentration durchführen, um diese insbesondere konstant zu halten.

Günstig ist es, wenn eine Menge an Brennstoff zudosiert wird, welche dem ermittelten Brennstoffverbrauch entspricht. Dadurch lässt sich auf einfache Weise die Brennstoffkonzentration konstant halten und dadurch wiederum lässt sich das Brennstoffzellensystem in einem optimalen Betriebspunkt betreiben. Auch wenn der ermittelte Brennstoffverbrauch nicht genau dem tatsächlichen Brennstoffverbrauch entspricht, lässt sich dennoch die Brennstoffkonzentration konstant halten. Falls der ermittelte Brennstoffverbrauch zu niedrig ist, wird weniger Brennstoff zudosiert. Dadurch sinkt die Brennstoffkonzentration, wodurch wiederum der Brennstoffverbrauch aufgrund von Brennstoffübertritt von der Anodenseite zur Kathodenseite sinkt. Ist umgekehrt der ermittelte Brennstoffverbrauch im Vergleich zu dem tatsächlichen Brennstoffverbrauch zu hoch, dann wird mehr Brennstoff zudosiert und die Brennstoffkonzentration steigt. Dadurch wiederum steigt der Brennstoffverbrauch aufgrund von Brennstoffübertritt. Die Größe der Abweichungen zwischen dem ermittelten Brennstoffverbrauch und dem tatsächlichen Brennstoffverbrauch sind von der Genauigkeit der Kalibrierungsfunktion abhängig sowie den Pumpen und den Sensoren abhängig.

Insbesondere ist die Brennstoffkonzentration für den anodenseitig zugeführten Brennstoff eine Regelgröße während des Betriebsmodus des Brennstoffzellensystems. Dadurch lässt sich eine Einregelung auf den optimalen Betriebspunkt des Brennstoffzellensystems erreichen. Dazu muss die Brennstoffkonzentration nicht gemessen werden, sondern über die Ermittlung des Brennstoffverbrauchs mit dem Übertrittanteil lässt sich eine Einregelung auf eine vorgegebene Brennstoffkonzentration durchführen.

Günstig ist es insbesondere, wenn die Brennstoffkonzentration nicht gemessen wird. Dadurch muss das Brennstoffzellensystem nicht dauerhaft einen entsprechenden Sensor erhalten. Über die Kalibrierungsfunktion (die für diese optimierte Brennstoffkonzentration ermittelt ist) lässt sich eine Einregelung erreichen, über die sich der optimierte Betriebspunkt erreichen lässt.

Der Erfindung liegt ferner die Aufgabe zugrunde, das eingangs genannte Brennstoffzellensystem so zu verbessern, dass es einfach aufgebaut ist.

Diese Aufgabe wird erfindungsgemäß dadurch gelöst, dass eine Messeinrichtung zur Messung des erzeugten Brennstoffzellenstroms vorgesehen ist und eine Ermittlungseinrichtung zur Ermittlung oder Erfassung mindestens eines der Parameter Temperatur, stöchiometrischer Faktor und Betriebsdruck vorgesehen ist, wobei die Regelungseinrichtung aus dem gemessenen Brennstoffzellenstrom einen Stromanteil des Brennstoffverbrauchs ermittelt und aus den weiteren ermittelten Daten über eine vorher bestimmte Kalibrierungsfunktion einen Übertrittsanteil des Brennstoffverbrauchs bezüglich des Brennstoffübertritts von der Anodenseite zur Kathodenseite ermittelt.

Das erfindungsgemäße Brennstoffzellensystem braucht während eines Betriebsmodus keinen Sensor zur Bestimmung insbesondere der Brennstoffkonzentration. Über die Kalibrierungsfunktion lässt sich der Übertrittsanteil auf der Grundlage von einfach ermittelbaren Parametern bestimmen. Das Brennstoffzellensystem lässt sich dadurch einfacher aufbauen.

Weitere Vorteile wurden im Zusammenhang mit den erfindungsgemäßen Verfahren erläutert.

Weitere vorteilhafte Ausführungsformen wurden ebenfalls im Zusammenhang mit den erfindungsgemäßen Verfahren erläutert.

Insbesondere ist die Regelungseinrichtung an eine Brennstoff-Dosierungseinrichtung wie beispielsweise eine Dosierpumpe oder ein Steuerventil gekoppelt. Dadurch lässt sich mit Hilfe des ermittelten Brennstoffverbrauchs die Brennstoffzuführung so regeln, dass ein optimierter Betriebspunkt erreichbar ist.

Die nachfolgende Beschreibung bevorzugter Ausführungsformen dient im Zusammenhang mit der Zeichnung der näheren Erläuterung der Erfindung. Es zeigen:

Figur 1        eine schematische Ansicht einer Direktmethanolbrennstoffzelle mit den relevanten Reaktionen;

Figur 2        eine schematische Darstellung eines Ausführungsbeispiels eines erfindungsgemäßen Brennstoffzellensystems;

Figuren 3 bis 7    Messdiagramme für ein Direktmethanolbrennstoffzellen-system mit

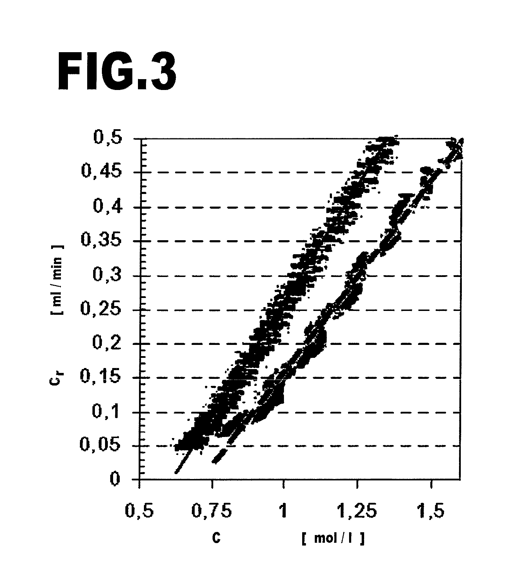

Figur 3    einem Ausschnitt aus einer Kalibrierungsfunktion als Crossover in Abhängigkeit der Konzentration bei konstanter Temperatur T = 70°C und zwei unterschiedlichen erzeugten Strömen (I = 12 A, obere Kurve und I = 6 A, untere Kurve) in Abhängigkeit der Methanolkonzentration, wobei die einge-zeichneten Geraden Regressionsgeraden sind;

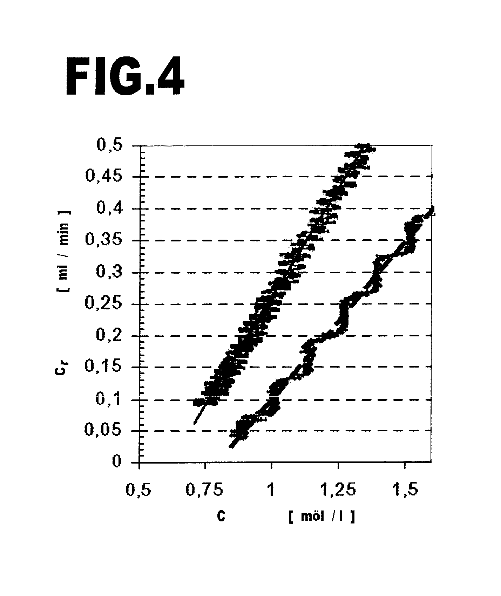

Figur 4    einen Ausschnitt aus der Kalibrierungsfunktion in Abhängig-keit der Methanolkonzentration bei konstantem Strom I = 12 A bei einer Temperatur von T = 70°C (obere Kurve) und T = 50°C (untere Kurve), wobei die eingezeichneten Geraden Regressionsgeraden sind;

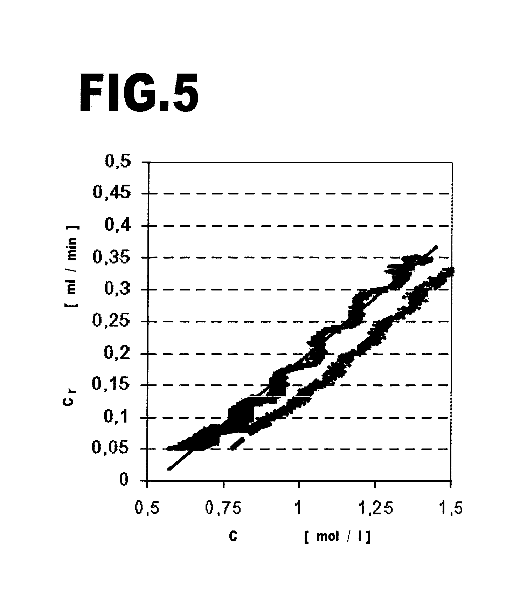

Figur 5    einen Ausschnitt aus der Kalibrierungsfunktion in Abhängig-keit der Konzentration für konstante Temperatur T = 50°C und konstantem Strom I = 6 A mit einem stöchiometrischen Methanolfaktor $\lambda_A$ = 18 (obere Kurve) und $\lambda_a$ = 6 (untere Kurve), wobei die eingezeichneten Geraden Regressions-geraden sind;

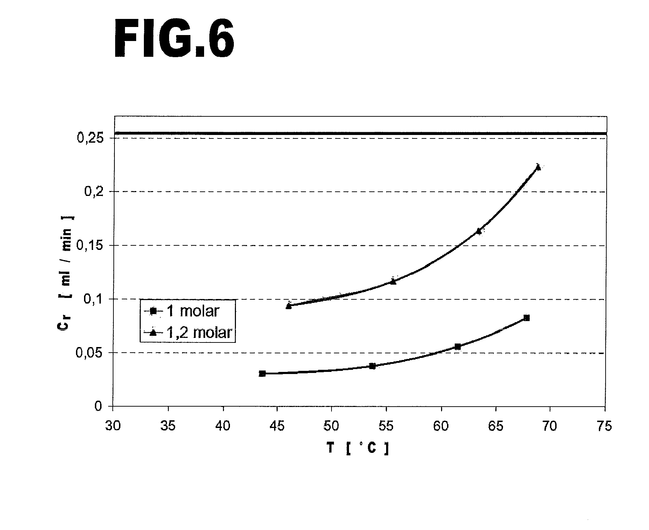

Figur 6    einen Ausschnitt der Kalibrierungsfunktion bei konstantem Strom I = 12 A und konstantem Stöchio-metriefaktor $\lambda_A$ = 6 für zwei unterschiedliche Konzentration und

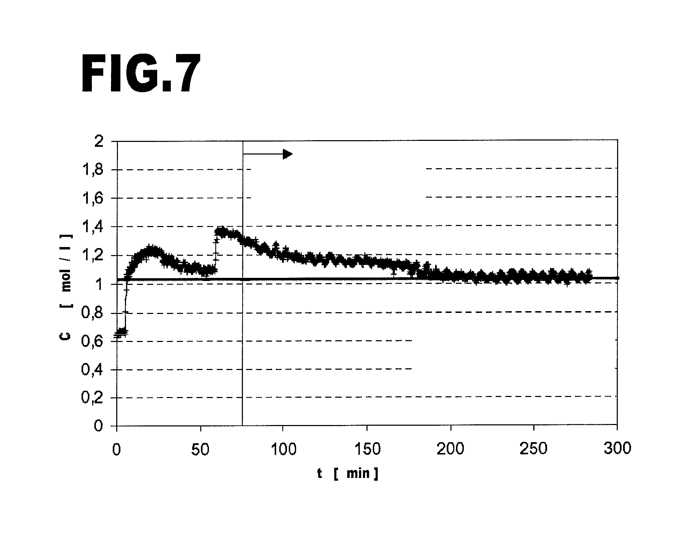

Figur 7    den zeitlichen Verlauf der Methanolkonzentration bei Durch-führung des erfindungsgemäßen Verfahrens.

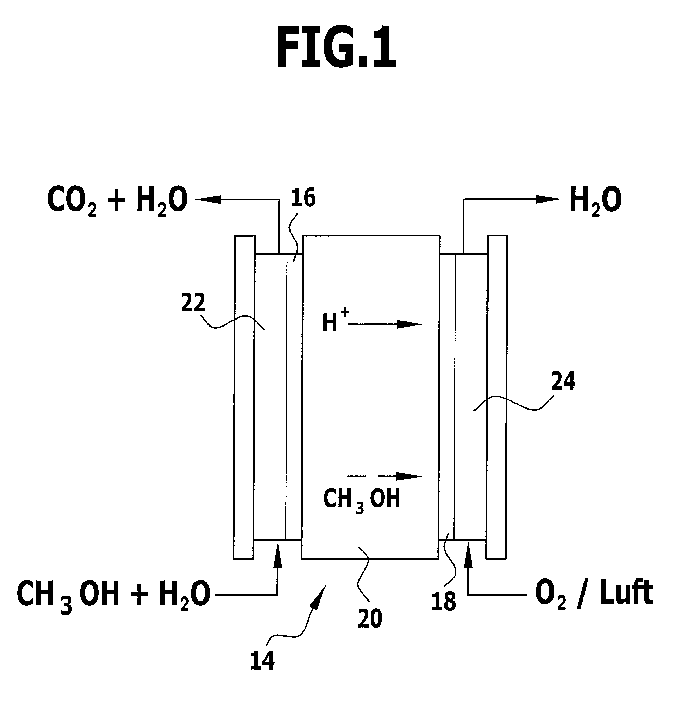

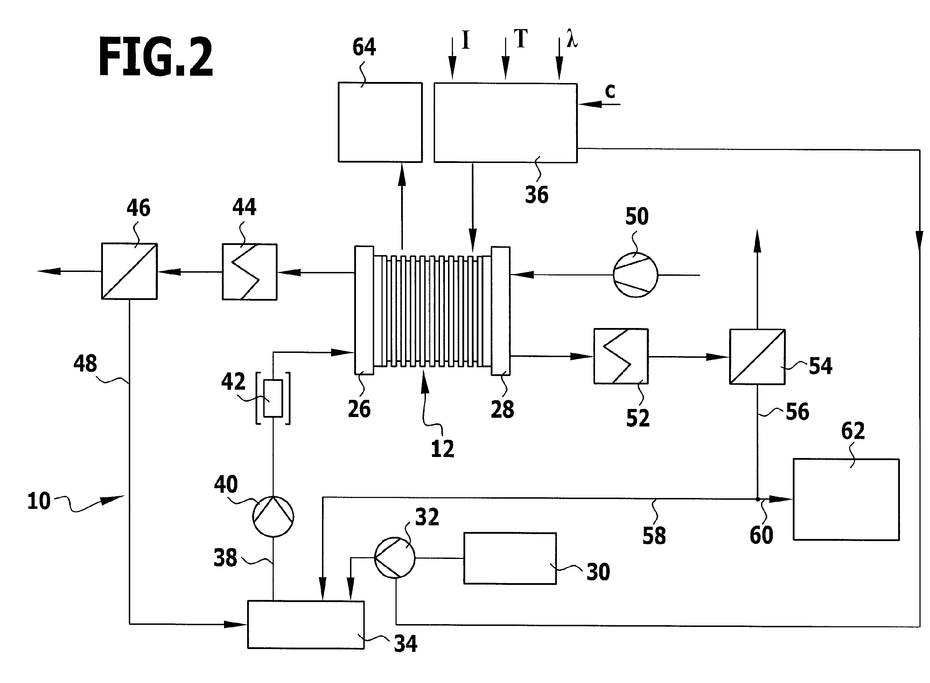

Ein Ausführungsbeispiel eines erfindungsgemäßen Brennstoffzellensystems, welches in Figur 2 gezeigt und dort mit 10 bezeichnet ist, umfasst einen Brennstoffzellenblock 12 (Brennstoffzellenstapel, Brennstoffzellen-Stack), welcher eine Mehrzahl von Brennstoffzellen 14 umfasst (Figur 1).

Eine Brennstoffzelle 14 umfasst eine Anode 16 und eine Kathode 18. Zwischen der Anode 16 und der Kathode 18 ist ein protonenleitender Elektrolyt 20 angeordnet, welcher beispielsweise in Form einer Membran ausgebildet ist.

Die Anode 16 und die Kathode 18 sind elektrisch über einen Stromkollektor kontaktiert.

Bei dem Brennstoffzellensystem 10 handelt es sich um ein Brennstoffzellensystem, welchem der Brennstoff in flüssiger Form zugeführt wird. Beispielsweise handelt es sich bei dem Brennstoffzellensystem 10 um ein Direktmethanolbrennstoffzellensystem (DMFC) oder um ein Direktethanolbrennstoffzellensystem (DEFC), bei dem der Brennstoff jeweils ein Alkohol, nämlich Methanol oder Ethanol ist; dieser Brennstoff wird in wässriger Lösung zugeführt.

Der Anode 16 ist zur Zuführung von Brennstoff ein Fluidverteiler 22 zugeordnet.

Der Kathode 18 wird Oxidator insbesondere in der Form von Luftsauerstoff zugeführt. Dazu ist der Kathode 18 ein entsprechender Fluidverteiler 24 zugeordnet.

Im folgenden wird das Brennstoffzellensystem 10 anhand eines Beispiels eines Direktmethanolbrennstoffzellensystems erläutert.

Bei diesem wird Methanol als Brennstoff zugeführt und an einer Brennstoffzelle 14 erfolgt eine kalte Verbren-nung gemäß folgender Bruttoreaktionsgleichung:

$$CH_3OH + 3/2\ 0_2 \rightarrow 2H_2O + CO_2$$

Dabei wird elektrischer Strom produziert. Durch die Stromproduktion tritt ein Brennstoffverbrauch auf.

Darüber hinaus kommt es insbesondere bei Direktmethanolbrennstoffzellen und Direktethanolbrennstoffzellen zu einem elektroosmotischen Übertritt des Brennstoffs von der Anodenseite zu der Kathodenseite (Brennstoff-Crossover oder Brennstoff-Drag). An der Kathodenseiten kommt es zu einer bezüglich der Stromproduktion nicht nutzbaren direkten Oxidation des Brennstoffs mit Sauerstoff. Es tritt also durch den Brennstoffübertritt ein Brennstoffverbrauch auf, der nicht zur Stromproduktion einer Brennstoffzelle 14 beiträgt.

In dem Brennstoffzellenblock 12 des Brennstoffzellensystems 10 (Figur 2) sind Brennstoffzellen 14 hintereinander angeordnet, wobei benachbarte Brennstoffzellen 14 fluidwirksam durch Bipolarplatten getrennt sind und durch die Bipolarplatten elektrisch miteinander verbunden sind.

Der Brennstoffzellenblock 12 weist eine Einrichtung 26 zur anodenseitigen Zuführung von Brennstoff und zur anodenseitigen Abführung von unverbrauchtem Brennstoff und von Reaktionsprodukten (insbesondere $CO_2$) auf. Ferner weist der Brennstoffzellenblock 12 eine Einrichtung 28 zur kathodenseitigen Zuführung von Oxidatorluft und zur kathodenseitigen Abführung von unverbrauchtem Oxidator und von Reaktionsprodukten, insbesondere von Wasser, auf.

Die Einrichtung 26 steht in Verbindung mit allen Anoden des Brennstoffzellenblocks 12 und die Einrichtung 28 steht in Verbindung mit allen Kathoden des Brennstoffzellenblocks 12.

Das Brennstoffzellensystem 10 umfasst eine Brennstoffquelle 30 wie beispielsweise einen Methanolspeicher, in dem reines Methanol gespeichert ist. Dieser Brennstoffquelle 30 ist eine Dosierpumpe 32 nachgeschaltet, über die eine dosierbare Menge an Brennstoff in einen Mischraum 34 einkoppelbar ist. Die Dosierpumpe 32 wird von einer Regelungseinrichtung 36 angesteuert.

In dem Mischraum 34 wird der Brennstoff einem flüssigen Träger, welcher insbesondere Wasser ist, zugefügt. Der Brennstoff wird dann in wässriger Lösung der Einrichtung 26 zugeführt.

Zur Brennstoffzuführung ist der Mischraum 34 über eine Leitung 38 mit der Einrichtung 26 verbunden. An der Leitung 38 sitzt eine Pumpe 40 zur Förderung der Brennstoff-Lösung zu der Einrichtung 28.

Aus dem Stand der Technik ist es bekannt, an der Leitung 38 einen oder mehrere Sensoren 42 zur Bestimmung des Brennstoffgehalts der Lösung vorzusehen. Ein solcher Sensor 42 ist bei der erfindungsgemäßen Lösung, wie unten näher erläutert wird, nicht notwendig.

Der Einrichtung 28 ist ausgangsseitig ein Kondensator 44 nachgeschaltet. Dem Kondensator 44 wiederum ist ein Separator 46 nachgeschaltet. Über diesen Separator 46 lassen sich Lösungsanteile und andere Anteile trennen. Über eine Leitung 48 lässt sich die Lösung (insbesondere Wasser) in den Mischraum 34 einkoppeln.

In dem Separator 46 abseparierte gasförmige Komponenten, welche insbesondere $CO_2$ umfassen, werden abgeführt.

Der Einrichtung 28 ist eingangsseitig ein Luftverdichter 50 vorgeschaltet.

Ausgangsseitig ist der Einrichtung 28 ein Kondensator 52 nachgeschaltet, dem wiederum ein Separator 54 nachgeschaltet ist. Durch den Separator 54 lässt sich der Lösungsmittelanteil abtrennen, d. h. es lässt sich insbesondere Wasser abtrennen. Abgetrenntes Wasser lässt sich über Leitungen 56, 58 in den Mischraum 34 einführen oder über Leitungen 56, 60 einem Lösungsmittel-überschussbehälter 62 zuführen.

Über den Separator 46 lässt sich Luft aus dem Brennstoffzellensystem 10 abführen; diese Luft ist sauerstoffverarmt.

Der von dem Brennstoffzellenblock 12 erzeugte Strom wird von einem Verbraucher abgenommen. Durch eine Strom-Messeinrichtung 64 wird er gemessen.

Damit das Brennstoffzellensystem 10 optimal arbeitet, muss die Brennstoffkonzentration im Brennstoffgemisch (beispielsweise Methanol in Wasser als Lösungsmittel) in einem optimierten Bereich gewählt werden. Es muss ein Methanolüberschuss vorliegen. Dieser wird durch den stöchiometrischen Faktor $\lambda_A$ charakterisiert, welcher den Methanol-Überschuss im Vergleich zu der stöchiometrischen Reaktion gemäß der obigen Gleichung angibt. Bei zu niedriger Brennstoffkonzentration ist ein Betrieb einer Brennstoffzelle 14 nicht möglich, da die Spannung zusammenbricht. Der Brennstoffübertritt von der Anode 16 zur Kathode 18 tritt grundsätzlich bei den momentan zur Verfügung stehenden Elektrolytmembranen auf; der Anteil an Brennstoff, welcher übertritt, ist jedoch um so größer, je höher die Brennstoffkonzentration ist.

Dadurch ergibt sich ein optimierter Bereich für die Brennstoffkonzentration, wobei die Brennstoffkonzentration nicht zu hoch und nicht zu niedrig gewählt werden darf. Insbesondere wird der Brennstoffzellenblock 12 mit einer konstanten Brennstoffkonzentration betrieben. Durch den Brennstoffverbrauch muss über die Dosierpumpe 32 Brennstoff in den Mischraum 34 geführt werden, um eben den Brennstoffverbrauch auszugleichen und insbesondere eine konstante Brennstoffkonzentration für an der Einrichtung 26 anstehendem Brennstoffgemisch zu erreichen.

Erfindungsgemäß wird der Brennstoffverbrauch dadurch ermittelt, dass von einem Stromanteil $V_I$ und von einem Übertrittsanteil $V_U$ ausgegangen wird, wobei der Stromanteil auf die oben beschriebene Bruttoreaktion zurückzuführen ist und der Übertrittsanteil auf den Brennstoff-Crossover von der Anodenseite zur Kathodenseite des Brennstoffzellensystems 10. Der Gesamtverbrauch ergibt sich dann aus

$$V_{ges} = V_I + V_U.$$

Der Stromanteil wird dadurch bestimmt, dass der von dem Brennstoffzellenblock 12 erzeugte Strom gemessen wird und daraus dann der zugeordnete Verbrauchsanteil berechnet wird.

Der Übertrittsanteil $V_u$ wird über eine zuvor bestimmte Kalibrierungsfunktion ermittelt:

Zur Ermittlung der Kalibrierungsfunktion werden an dem Brennstoffzellensystem 10 während einer Kalibrierungsphase Kalibrierungsdaten aufgenommen, welche den Brennstoff-Crossover charakterisieren. Die Kalibrierungsdaten werden individuell für den Brennstoffzellenblock 12 oder für einen Typus von einheitlichen Brennstoffzellenblöcken 12 aufgenommen.

Der Brennstoffübertritt von einer Anode 16 zu einer Kathode 18 ist grundsätzlich abhängig von der Brennstoffkonzentration c, der Temperatur T, des stöchiometrischen Faktors $\lambda_A$, des Stroms I, dem Betriebsdruck, der Ausgestaltung des Elektrolyts 20, von Elektrodenschichten der Anode 16 und der Kathode 18, von Gasdiffusionsschichten und von der Ausgestaltung der Fluidverteiler 22, 24. Für ein gegebenes Brennstoffzellensystem 10 sind bei festgelegtem konstanten Betriebsdruck die Parameter Methanolkonzentration c, Temperatur T, stöchiometrischer Faktor $\lambda_A$ und Strom I variabel.

Zur Bestimmung der Kalibrierungsdaten werden eine oder mehrere dieser Parameter variiert und über aus dem Stand der Technik bekannte Verfahren wird die Übertrittsmenge an Brennstoff von der Anodenseite zur Kathodenseite ermittelt.

Beispielsweise wird die Übertrittsmenge durch direkte Konzentrationsbestimmung des Brennstoffs erfasst oder durch die Konzentration an $CO_2$ im Kathodenabgas (nach dem Separator 46) oder über eine separate elektrochemische Zelle als Sensorelement. Beispielsweise kann auch die Dichte und die Temperatur der Brennstofflösung mittels eines Koriolismeters gemessen werden.

Bei der erfindungsgemäßen Lösung ist ein Sensor jedoch nur für die Kalibrierungsphase notwendig; während des normalen Betriebs des Brennstoffzellensystems 10 ist keine solche Messung notwendig, so dass das Brennstoffzellensystem 10 für den Normalbetrieb auch nicht mit einem entsprechenden Sensor ausgestattet werden muss.

Üblicherweise wird ein Direktmethanolbrennstoffzellensystem oder ein Direktethanolbrennstoffzellensystem mit konstanter Brennstoffzellenkonzentration betrieben.

Die Kalibrierungsfunktion wird dann bestimmt über Variation des Stroms I, der Temperatur T, der Brennstoffkonzentration c und des stöchiometrischen Faktors $\lambda_A$.

In den Figuren 3 bis 5 sind Ausschnitte aus Kalibrierungsfunktionen gezeigt, welche für ein Direktmethanolbrennstoffzellensystem mit fünf hintereinandergeschalteten Brennstoffzellen mit einer Elektrodenfläche von je 25 cm$^2$ aufgenommen wurde. Die Figur 3 zeigt die Übertrittsmenge (Crossover-Menge) in Milliliter pro Minute als Funktion der Methanolkonzentration in mol/l jeweils bei einer Temperatur T = 70°C. Die obere Kurve wurde für einen Strom von I = 12 A aufgenommen und die untere Kurve für einen Strom von I = 6 A. Die eingezeichneten Geraden sind Regressionsgeraden.

In Figur 4 ist die Crossover-Menge als Funktion der Konzentration für verschiedene Temperaturen bei einem Strom von I = 12 A gezeigt; die obere Kurve wurde für eine Temperatur von 70°C aufgenommen und die untere Kurve für eine Temperatur von 50°C. Die gezeigten Geraden sind Regressionsgeraden.

Die Figur 5 zeigt die Crossover-Menge in Abhängigkeit der Methanolkonzentration bei konstanter Temperatur T = 50°C und konstantem Strom I = 6 A für stöchiometrische Faktoren $\lambda_A = 16$ (obere Kurve) und $\lambda_A = 6$ (untere Kurve).

Die Figur 6 zeigt die Crossover-Menge als Funktion der Temperatur bei konstanten $\lambda_A = 6$ und Strom I = 12 A für zwei verschiedene Konzentrationen.

Die Parameter I, T, $\lambda$, c (oder eine Untermenge aus diesen Parametern) werden variiert, so dass sich Kalibrierungsdaten ergeben, aus denen sich wiederum eine Kalibrierungsfunktion entsprechend der Crossover-Menge an Brennstoff in Abhängigkeit des entsprechenden Parametersatzes ergibt.

Bei dem normalen Betrieb des Brennstoffzellensystems 10 (nach Abschluss der Kalibrierungsphase) wird durch die Strom-Messeinrichtung 64 der Strom I ermittelt. Ferner wird die Temperatur T ermittelt und es wird der stöchiometrische Faktor $\lambda_A$ erfasst (beispielsweise wird er vorgegeben).

Es ist grundsätzlich möglich, dass auch die Konzentration c ermittelt wird, jedoch ist dies zur Konzentrationsregelung nicht unbedingt notwendig, wie unten noch näher erläutert wird.

Die ermittelten bzw. erfassten Parameter (insbesondere I, T, $\lambda_A$ oder eine Untermenge davon) werden mit entsprechenden Messeinrichtungen gemessen bzw. Ermittlungseinrichtungen ermittelt und der Regelungseinrichtung 36 übergeben. Die Regelungseinrichtung 36 bestimmt aus diesen Daten über die Kalibrierfunktion den zugeordneten Brennstoffverbrauch aufgrund von Brennstoffübertritt von der Anodenseite zur Kathodenseite. Aufgrund des damit ermittelten Übertrittsanteils kann der Gesamtbrennstoffverbrauch ermittelt werden.

In Figur 7 ist schematisch der zeitliche Ablauf für ein Regelungsverfahren anhand der Konzentration gezeigt. Die Konzentration soll dabei auf einen festen Wert 1 mol pro Liter eingestellt werden, d. h. die Konzentration ist die Regelgröße, welche zu regeln ist. Der entsprechende Brennstoffzellenblock 12 ist bei T = 50°C, I = 12 A und Umgebungsdruck betrieben. Bei diesen Parametern hat sich für eine Zielkonzentration von einer einmolaren Lösung an Brennstoffgemisch ein Crossover von 0,12 ml/min ergeben.

Zu Beginn des Regelungsverfahrens betrug die Konzentration 1,4 mol/l. Durch das Regelungsverfahren wurde der Gesamtbrennstoffverbrauch bestimmt und die Regelung durch Dosierung der Brennstoffzuführung über die Dosierpumpe so durchgeführt, dass sich, wie in Figur 7 gezeigt, die optimierte Konzentration von 1 mol/l einstellt und im wesentlichen konstant gehalten wird.

Durch das Regelungsverfahren lässt sich, wenn die Brennstoffkonzentration zu hoch oder zu niedrig ist, mit Hilfe der vorher bestimmten Kalibrierfunktion eine Einregelung auf den optimalen Wert bzw. optimalen Wertebereich erreichen, ohne dass die Brennstoffkonzentration selber gemessen werden muss.

Wenn der Brennstoffzellenblock 12 nur mit einer vorgegebenen Brennstoffkonzentration betrieben werden soll, dann reicht es aus, die Kalibrierungsfunktion für diese vorgegebene Brennstoffkonzentration zu ermitteln. Bei dem erfindungsgemäßen Regelungsverfahren erfolgt eine automatische Einregelung auf den optimalen Konzentrationswert des Brennstoffes; diese optimale Brennstoffkonzentration ist die Regelgröße. Der Brennstoffübertritt von der Anodenseite zur Kathodenseite hängt relativ stark von der Brennstoffkonzentration ab. Die Kalibrierungsfunktion lässt sich auf die Brennstoff-Zielkonzentration beziehen. Wenn die tatsächliche Brennstoffkonzentration (Ist-Konzentration) über der Ziel-Brennstoffkonzentration liegt, so wird über die Kalibrierungsfunktion ein niedrigerer Übertrittswert berechnet als tatsächlich vorliegt. Dadurch wird dann aber auch über die Dosierpumpe 32 weniger Brennstoff nachdosiert. Dies führt dazu, dass die Brennstoffkonzentration sinkt, was auch wünschenswert ist.

Wenn die Ist-Brennstoffkonzentration über der Ziel-Brennstoffkonzentration liegt, so wird über die Kalibrierungsfunktion ein größerer Übertrittswert berechnet als tatsächlich vorliegt. Dadurch wird durch die Dosierpumpe 22 mehr nachdosiert und die Brennstoffkonzentration steigt, wie es gewünscht ist. Es wird also stets die Ziel-Brennstoffkonzentration erreicht.

**Patentansprüche**

1. Verfahren zur Bestimmung des Brennstoffverbrauchs eines Brennstoffzellensystems mit mindestens einer Brennstoffzelle, welche eine Anode und eine Kathode aufweist, wobei der Anode Brennstoff und der Kathode Oxidator zugeführt wird, und bei welcher ein Brennstoffübertritt von der Anodenseite zur Kathodenseite auftreten kann, **dadurch gekennzeichnet , dass** der Brennstoffverbrauch als Summe eines Stromanteils und eines Übertrittsanteils berechnet wird, wobei zur Bestimmung des Stromanteils der von dem Brennstoffzellensystem erzeugte Strom gemessen wird und der Übertrittsanteil mittels einer vorher bestimmten Kalibrierungsfunktion für den Brennstoffübertritt ermittelt wird.

2. Verfahren nach Anspruch 1, **dadurch gekennzeichnet, dass** der Brennstoff der Anode in Lösung zugeführt wird.

3. Verfahren nach Anspruch 1 oder 2, **dadurch gekennzeichnet, dass** der erzeugte Strom zeitaufgelöst während des Betriebs des Brennstoffzellensystems gemessen wird.

4. Verfahren nach einem der vorangehenden Ansprüche, **dadurch gekennzeichnet, dass** die Kalibrierungsfunktion für Brennstoffübertritt für einen Brennstoffzellenblock oder einen Typus von Brennstoffzellenblöcken individuell ermittelt wird.

5. Verfahren nach einem der vorangehenden Ansprüche, **dadurch gekennzeichnet, dass** Kalibrierungsdaten für die Kalibrierungsfunktion während eines Kalibrierungsbetriebs des Brennstoffzellensystems ermittelt werden.

6. Verfahren nach einem der vorangehenden Ansprüche, **dadurch gekennzeichnet, dass** Kalibrierungsdaten für die Kalibrierungsfunktion mittels einem oder mehreren Sensoren ermittelt werden.

7. Verfahren nach einem der vorangehenden Ansprüche, **dadurch gekennzeichnet, dass** Kalibrierungsdaten für die Kalibrierungsfunktion in Abhängigkeit von einem oder mehreren der Parameter Brennstoffkonzentration, Temperatur, erzeugter Strom, stöchiometrischer Faktor, Betriebsdruck ermittelt werden.

8. Verfahren nach Anspruch 7, **dadurch gekennzeichnet, dass** die Parameter Temperatur und/oder Brennstoffkonzentration und/oder erzeugter Strom und/oder stöchiometrischer Faktor und/oder Betriebsdruck zur Ermittlung der Kalibrierungsdaten variiert werden.

9. Verfahren nach einem der vorangehenden Ansprüche, **dadurch gekennzeichnet, dass** Kalibrierungsdaten der Kalibrierungsfunktion in Form von Brennstoffübertrittsmengen pro Zeiteinheit gespeichert werden.

10. Verfahren nach einem der vorangehenden Ansprüche, **dadurch gekennzeichnet, dass** zur Bestimmung des Übertrittsanteils am Brennstoffverbrauch die Temperatur und/oder der erzeugte Strom und/oder der stöchiometrische Faktor und/oder die Brennstoffkonzentration und/oder Betriebsdruck ermittelt oder erfasst werden und über die Kalibrierungsfunktion der zugehörige Übertrittsanteil am Brennstoffverbrauch bestimmt wird.

11. Verfahren nach Anspruch 10, **dadurch gekennzeichnet, dass** die Parameter zeitaufgelöst ermittelt werden.

12. Verfahren nach einem der vorangehenden Ansprüche, **dadurch gekennzeichnet, dass** der Brennstoff ein Alkohol ist.

13. Verfahren nach einem der vorangehenden Ansprüche, **dadurch gekennzeichnet, dass** das Brennstoffzellensystem ein Direktmethanolbrennstoffzellensystem ist.

**14.** Verfahren nach einem der Ansprüche 1 bis 12, **dadurch gekennzeichnet, dass** das Brennstoffzellensystem ein Direktethanolbrennstoffzellensystem ist.

**15.** Verfahren zum Betrieb eines Brennstoffzellensystems, welches mindestens eine Brennstoffzelle mit einer Anode und einer Kathode umfasst, wobei anodenseitig Brennstoff zugeführt wird und kathodenseitig Oxidator zugeführt wird, und wobei Brennstoff von der Anodenseite zur Kathodenseite übertreten kann, **dadurch gekennzeichnet, dass** der Brennstoffverbrauch gemäß dem Verfahren nach einem der vorangehenden Ansprüche ermittelt wird und die Brennstoffzuführung gemäß dem ermittelten Brennstoffverbrauch geregelt wird.

**16.** Verfahren nach Anspruch 15, **dadurch gekennzeichnet, dass** eine Menge an Brennstoff zudosiert wird, welche dem ermittelten Brennstoffverbrauch entspricht.

**17.** Verfahren nach Anspruch 15 oder 16, **dadurch gekennzeichnet, dass** die Brennstoffkonzentration für den anodenseitig zugeführten Brennstoff eine Regelgröße während des Betriebsmodus des Brennstoffzellensystems ist.

**18.** Verfahren nach Anspruch 17, **dadurch gekennzeichnet, dass** die Brennstoffkonzentration nicht gemessen wird.

**19.** Brennstoffzellensystem, umfassend mindestens eine Brennstoffzelle (14) mit einer Anode (16) und einer Kathode (18), und eine Regelungseinrichtung (36) für die Brennstoffzuführung, **dadurch gekennzeichnet, dass** eine Messeinrichtung (64) zur Messung des erzeugten Brennstoffzellenstroms vorgesehen ist, und dass eine Ermittlungseinrichtung zur Ermittlung oder Erfassung mindestens eines der Parameter Temperatur, stöchiometrischer Faktor und Betriebsdruck vorgesehen ist, wobei die Regelungseinrichtung (36) aus dem gemessenen Brennstoffzellenstrom einen Stromanteil des Brennstoffverbrauchs ermittelt und aus den weiteren ermittelten Daten über eine vorher bestimmte Kalibrierungsfunktion ein Übertrittsanteil des Brennstoffverbrauchs bezüglich des Brennstoffübertritts von der Anodenseite zur Kathodenseite ermittelt.

**20.** Brennstoffzellensystem nach Anspruch 19, **dadurch gekennzeichnet, dass** die Regelungseinrichtung (36) an eine Brennstoff-Dosierungseinrichtung (32) gekoppelt ist.

# FIG.1

$CO_2 + H_2O$ ← 16

$H_2O$

22

$H^+$ →

24

$\overline{CH_3}OH$ →

$CH_3OH + H_2O$

18

$O_2$ / Luft

14 20

# FIG.2

# FIG.3

# FIG.4

# FIG.5

# FIG.6

# FIG.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19938790 A1
- DE 19945928 C1
- DE 19948908 A1
- WO 03012904 A2
- US 20020086193 A1
- US 20030157385 A1
- WO 0215314 A1
- US 6488837 B1
- WO 0246733 A1
- US 20030224231 A1
- DE 10258496 A1
- DE 10039959

**In der Beschreibung aufgeführte Nicht-Patentliteratur**

- **S.R. NARAYANAN et al.** Design and Operation of an electrochemical Methanol Concentration Sensor for Direct Methanol Fuel Cell Systems. *Electrochemical and Solid-State Letters,* 2000, vol. 3 (3), 117-120